# EUROPÄISCHE PATENTSCHRIFT

(11) **EP 0 956 753 B1**
(45) Veröffentlichungstag und Bekanntmachung des Hinweises auf die Patenterteilung: **01.02.2006**
(21) Anmeldenummer: 99107224.0
(22) Anmeldetag: 14.04.1999
(51) Int. Cl.: A01B 73/00, A01B 63/10

(54) **Transportverriegelung einer landwirtschaftlichen Arbeitsmaschine**
Agricultural working machine transport lock
Verrouillage de transport pour machine de travail agricole

(30) Priorität: 27.04.1998 DE 19818685
(43) Veröffentlichungstag der Anmeldung: 17.11.1999
(73) Patentinhaber: CLAAS Saulgau GmbH, 88340 Bad Saulgau (DE)
(72) Erfinder: Boll, Ulrich, 88348 Saulgau (DE)

(56) Entgegenhaltungen:
- EP-A- 0 788 730
- CH-A- 613 360
- DE-A- 3 816 149
- US-A- 4 650 206

## Beschreibung

Die Erfindung betrifft eine Transportverriegelung einer landwirtschaftlichen Arbeitsmaschine gemäß dem Oberbegriff des Patentanspruchs 1.

Bei allen landwirtschaftlichen Arbeitsmaschinen, deren Arbeitsorgane zu einer oder mehreren Einzelarbeitsbreiten realisierenden Unterbaugruppen zusammengefaßt sind, insbesondere Schwader, Wender und Mähwerke, hat die Forderung nach stetig steigenden Arbeitsbreiten dazu geführt, daß zur Einhaltung von vorgeschriebenen Transportbreiten die Arbeitsorgane von ihrer Arbeitsstellung in eine Transportstellung bringbar sein müssen.

Aus der CH 613 360 A5 ist eine Bodenbearbeitungsmaschine bekannt. Demzufolge handelt es sich um eine Bodenbearbeitungsmaschine mit drei Gruppen von Werkzeugträgern, wobei die beiden äußeren Gruppen der Werkzeugträger an mindestens zwei im Abstand voneinander liegenden Gelenken abgestützt sind. Betätigt werden die schwenkbaren Gruppen von Werkzeugträger von Stellzylindern an denen ein Riegel angeordnet ist, dem ein Riegelbolzen auf dem Gestell der nach oben zu klappenden Gruppe von Werkzeugträgern zugeordnet ist. Gelöst werden kann die Verriegelung vom Schlepper aus mit Zugmittel, beispielsweise ausgebildet als Zugseile.

Zur Lösung dieses Problems steht dem Fachmann ein umfangreicher Stand der Technik zur Verfügung, in dem das Verschwenken der Arbeitsorgane von der Arbeits- in die Transportstellung und umgekehrt um in Fahrtrichtung verlaufende oder senkrecht zur Fahrtrichtung angeordnete Achsen erfolgt, wobei die Anzahl der gleichzeitig oder aufeinanderfolgend verschwenkbaren Arbeitsorgane von der Ausführungsform der landwirtschaftlichen Arbeitsmaschine abhängt. Gemäß den EURO-Patenten EP 391 093 und EP 622 006 wird die Lageänderung der Arbeitsorgane im allgemeinen durch druckbeaufschlagbare Verstellelemente vorzugsweise Hubzylinder, deren kolbenstangenseitiges Ende unter Umständen mit weiteren Koppelgliedern zur Verschwenkbarkeit von segmentweise aufgebauten landwirtschaftlichen Arbeitsmaschienen wie Wendern in Verbindung stehen kann realisiert. Der Vorgang des Verschwenkens wird an derartigen landwirtschaftlichen Arbeitsmaschinen durch den Fahrer des Zugfahrzeugs dadurch ausgelöst, daß er das im Zugfahrzeug adaptierte Betätigungselement zur Druckbeaufschlagung des oder der Zylinder solange betätigt, bis die Arbeitselemente die gewünschte Stellung (Transport- oder Arbeitsteilung) einnehmen. Die druckbeaufschlagbaren Verstellelemente sind im allgemeinen als einfachwirkende Hubzylinder ausgeführt, wobei das Ausschieben der Kolbenstange aus dem Kolben des Hubzylinders durch eine am Kolbenstangenende angreifende und durch die Gewichtskraft der in Transportstellung gehaltenen Arbeitsorgane verursachte Reaktionskraft bewirkt wird. Damit nach dem Abschalten des energieübertragenden Mediums keine ungewollte Abwärtsbewegung der Arbeitsorgane von der Transport- in die Arbeitsstellung erfolgt, werden die Arbeitsorgane in der Transportstellung durch manuell oder hydraulisch ver- und endriegelbare mechanische Anschläge fixiert. Während zur Verriegelung selbstätig arbeitende Mechanismen bekannt sind, muß die Entriegelung der Arbeitsorgane in der Transportstellung vom Fahrer des Zugfahrzeugs entweder manuelloder durch ein, einen separaten Hydraulikkreislauf erforderndes hydraulisches Stellsignal vorgenommen werden. Die Adaptierung je eines solchen mechanischen Verriegelungsmechanismus für jede aus wenigstens einem Arbeitsorgan bestehende, Einzelarbeitsbreiten realisierende Unterbaugruppe einer landwirtschaftlichen Arbeitsmaschine der oben beschriebenen Art verkompliziert deren konstruktive Ausführung und fordert vom Zugfahrzeugführer zusätzliche Bedien- und Verstelltätigkeiten.

Der Erfindung liegt deshalb die Aufgabe zugrunde, eine beim Verschwenken der Arbeitsorgane von der Arbeits- in die Transportstellung vorgesehene Transportverreigelung einer landwirschaftlichen Arbeitsmaschine nach dem Gattungsbegriff des Anspruchs 1 so zu gestalten, daß der Bedien-, Steuer- und Überwachungsaufwand des Trägerfahrzeugführers während des Verschwenkens der Arbeitsorgane gegenüber den aus dem Stand der Technik bekannten Ausführungen erheblich verringert wird und auf konstruktiv einfache Weise eine den Trägerfahrzeugführer entlastende selbsttätige Verriegelung in der Transportstellung realisierbar ist.

Erfindungsgemäß wird die Aufgabe durch eine Transportverriegelung der Arbeitsorgane einer landwirtschaftlichen Arbeitsmaschine mit den kennzeichnenden Merkmalen des Anspruchs 1 gelöst.

Eine solche Ausgestaltung der Hubzylindersteuerung der Arbeitsorgane ermöglicht es dem Trägerfahrzeugführer auf eine Überwachung des Verschwenk- und Verriegelungsvorganges zu verzichten, da der im Leitungsstrang des energieübertragenden Mediums integrierte Drucksensor bei Überschreitung eines definierbaren Druckschwellwertes ein Signal liefert, welches über eine Schalteinheit die selbsttätige Verstellung eines Wegeventils von der Durchlaß- in die Sperrstellung realisiert, so daß eine hydraulische Verriegelung der Arbeitsorgane in der Transportstellung erreicht wird, ohne daß eine Bedienperson die Transportverriegelung auslösen oder manuell durchführen muß.

In vorteilhafter Weise ist die Schalteinheit so ausgeführt, daß eine Bedienperson durch Betätigung eines Tasters an der an einer Spannungsquelle angeschlossenen Schalteinheit ein elektrisches Signal erzeugt, welches das Wegeventil wieder in Durchlaßstellung schaltet. Dadurch wird erreicht, daß die Verriegelung nur dann aufgehoben werden kann, wenn das Schaltgerät an einer Spannungsquelle angeschlossen und durch eine Bedienperson ein Schaltelement betätigt wird, so daß es nicht zu einer ungewollten Entriegelung kommen kann.

Weitere vorteilhafte Ausgestaltungen sind Gegenstand der Unteransprüche und werden an Hand eines in Zeichnungen dargestellten Ausführungsbeispiels näher erläutert.

Es zeigen
- Figur 1: eine an einem Zugfahrzeug adaptierte, als Schwader ausgeführte landwirtschaftliche Arbeitsmaschine mit erfindungsgemäßer Hubzylindersteuerung
- Figur 2: eine erfindungsgemäße Hubzylindersteuerung in schematischer Form.

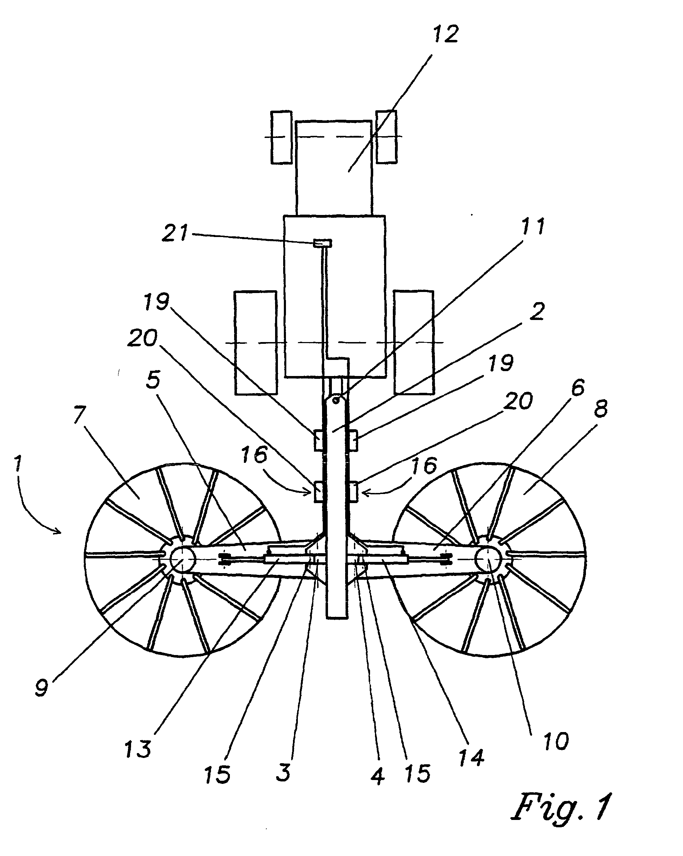

In Figur 1 ist eine als Schwader 1 ausgeführte landwirtschaftliche Arbeitsmaschine dargestellt, die einen Maschinenhauptrahmen 2 aufweist, an dem seitlich ausladende, um in Fahrtrichtung verlaufende Achsen 3, 4 schwenkbare Hilfsrahmen 5, 6 angebracht sind, die je ein um eine vertikale Achse 9, 10 umlaufendes als Schwadkreisel 7, 8 ausgeführtes Arbeitsorgan aufnehmen. Da die

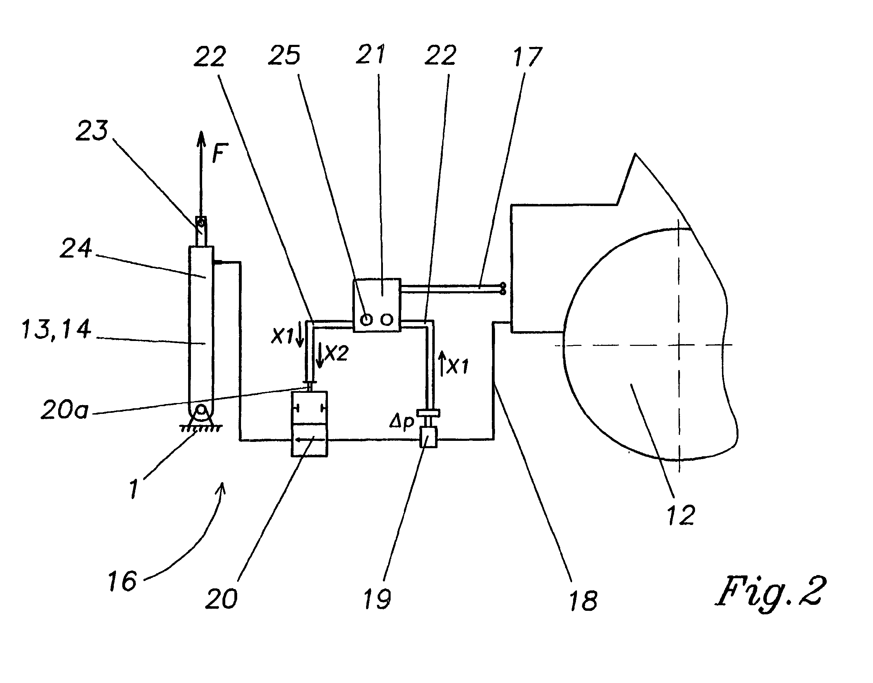

Schwadkreisel 7, 8 aus dem Stand der Technik hinlänglich bekannt sind, wird deren Ausführung nicht näher beschrieben. Der Maschinenhauptrahmen 2 verfügt an seinem zugfahrzeugseitigen Ende über einen Kupplungsmechanismus 11 über den er mit dem Zugfahrzeug 12 verbunden ist. Jedem Hilfsrahmen 7, 8 ist ein hydraulisch verstellbarer Hubzylinder 13, 14 zugeordnet, der einenends um eine ebenfalls in Fahrtrichtung verlaufende Achse 15 schwenkbar am Maschinenhauptrahmen 2 angeordnet und anderenends gelenkig mit dem jeweiligen Hilfsrahmen 5, 6 verbunden ist. Jeder Hubzylinder 13, 14 verfügt über eine erfindungsgemäße, in Figur 2 detailliert dargestellte Hubzylindersteuerung 16, wobei in einer vorteilhaften Weiterbildung der Erfindung auch eine einzige erfindungsgemäße Hubzylindersteuerung 16 für beide im Ausführungsbeispiel dargestellten Schwadkreisel 7, 8 vorsehbar ist. Die erfindungsgemäße Hubzylindersteuerung 16 ist zwischen Hubzylinder 13, 14 und Zugfahrzeug 12 eingeschaltet und ist zugfahrzeugseitig über elektrische und hydraulische Leitungssysteme 17, 18 mit den am Zugfahrzeug 12 vorhandenen nicht näher erläuterten elektrischen und hydraulischen Adaptern verbunden. Das hydraulische Leitungssystem 18 verbindet die nicht dargestellte ölstromerzeugende Quelle des Zugfahrzeugs 12 mit den in Reihe geschalteten Elementen Drucksensor 19, Wegeventil 20 und jeweiligem Hubzylinder 13, 14 der erfindungsgemäßen Hubrylindersteuerung 16. Das elektrische Leitungssystem 17 verbindet die ebenfalls nicht dargestellte Spannungsquelle des Zugfahrzeugs 12 mit dem Schaltgerät 21 der Hubzylindersteuerung 16. Das Schaltgerät 21 ist ebenfalls über ein elektrisches Leitungssystem 22 mit dem Drucksensor 19 und dem Wegeventil 20 verbunden. Die Arbeitsorgane 7,8 befinden sich dann in Arbeitsstellung, wenn die Kolbenstange 23 jedes Hubzylinders 13, 14 aus dem Kolben 24 ausgeschoben ist und umgekehrt befinden sich die Arbeitsorgane dann bei eingefahrener Kolbenstange 23 in Transportstellung.

Sollen die Arbeitsorgane 7, 8 von der Arbeits- in die Transportstellung verschwenkt werden, wird die Hydraulikleitung 18 durch den Zugfahrzeugführer druckbeaufschlagt, so daß die Kolbenstange 23 in den Kolben 24 des jeweiligen Hubzylinders 13, 14 geschoben wird. Nachdem die Kolbenstange 23 ihre Endstellung erreicht hat steigt der Druck im Leitungssystem 18 solange an, bis der Schwellwert Δp des Drucksensors 19 erreicht ist. Der nicht näher dargestellte und an sich bekannte Drucksensor 19 ist so aufgebaut, daß die Druckerhöhung im Leitungssystem 18 einen Kontakt im Drucksensor 19 schließt und ein elektrisches Signal X1 über das Steuergerät 21 an die Steuereinheit 20a des Wegeventils 20 übertragen wird und dort die Schaltung des Wegeventils 20 von der Durchlaß- in die Sperrstellung hervorruft. Auf diese Weise wird durch das Wegevemtil 20 die Funktion eines Rückschlagventils übernommen, so daß die so erlangte selbsttätige hydraulische Verriegelung der Transportstellung ein ungewolltes Absenken der Arbeitsorgane beim Einsatz kostengünstiger einfachwirkender Zylinder verhindert.

Sollen die Arbeitsorgane 7, 8 von der Transport- in die Arbeitsstellung verschwenkt werden wird der Taster 25 des Schaltgerätes 21 betätigt, wodurch ein elektrisches Signal X2 vom Schaltgerät 21 zur Steuereinheit 20a des Wegeventils 20 übertragen wird, welches die hydraulische Verriegelung aufhebt in dem das Wegeventil wieder von der Sperr- in die Durchlaßstellung umgeschaltet wird. In Abhängigkeit von der Eigenmasse der von den Hubzylindern 13, 14 gehaltenen Baugruppen 5-8 greift an der jeweiligen Kolbenstange 23 eine Reaktionskraft F an, die die Kolbenstange 23 aus dem Kolben 24 zieht, wodurch die Arbeitsorgane 7, 8 wieder in die Arbeitsstellung bewegt werden. Da die Verriegelung der Transportstellung nur dann aufgehoben werden kann, wenn das Schaltgerät an die nicht dargestellte Spannungsquelle des Zugfahrzeugs 12 angeschlossen ist und der Taster 25 des Schaltgerätes 21 betätigt wird, ist außerdem sichergestellt, daß die Fixierung der Arbeitsorgane in Transportstellung nicht ungewollt aufgehoben werden kann.

Der Erfindungsgegenstand ist nicht nur auf die in Figur 1 dargestellte, als Schwader 1 ausgeführte landwirtschaftliche Arbeitsmaschine beschränkt, sondern kann auch an jeder beliebigen landwirtschaftlichen Arbeitsmaschine angewendet werden, deren Arbeitsorgane durch Verstellorgane, die im einfachsten Fall wie beschrieben hydraulisch betätigbare Hubzylinder sein können, von einer Arbeits- in eine Transportstellung verschwenkbar sind, wie dies insbesondere bei Heuwendem und Mähwerken der Fall ist, wobei die Lage der jeweiligen Schwenkachse nicht an eine bestimmte Richtung gebunden sein muß.

### Bezugszeichenliste

- 1: Schwader
- 2: Maschinenhauptrahmen
- 3, 4: Schwenkachsen
- 5, 6: Hilfsrahmen
- 7,8: Schwadkreisel
- 9, 10: vertikale Achsen
- 11: Kupplungsmechanismus
- 12: Zugfahrzeug
- 13, 14: Hubzylinder
- 15: Achse
- 16: Hubzylindersteuerung
- 17: elektrisches Leitungssystem
- 18: hydraulisches Leitungssystem
- 19: Drucksensor
- 20: Wegeventil
- 20a: Steuereinheit des Wegeventils
- 21: Schaltgerät
- 22: elektrisches Leitungssystem
- 23: Kolbenstange
- 24: Kolben
- 25: Taster

- F: Reaktionskraft
- Δp: Schwellwert des Drucks
- X1, X2: Signal

## Patentansprüche

1. Transportverriegelung einer landwirtschaftlichen Arbeitsmaschine, deren Arbeitsorgane wenigstens eine bauliche Einheit bilden, die über wenigstens einen Hubzylinder (13,14) mit einem an einem Zug- oder Trägerfahrzeu (12) adaptierbaren Maschinenrahmen zur Realisierung einer oder mehrerer Arbeits- und Transportstellungen schwenkbeweglich verbunden ist, und deren Transportverriegelung in der Transportstellung selbsttätig verriegelt und die fernbetätigbar wieder entriegelbar ist,
**dadurch gekennzeichnet,**
**daß** der Transportverriegelung eine Hubzylindersteuerung (16) derart zugeordnet ist, dass diese beim Verschwenken der Arbeitsorgane (7, 8) von einer Arbeits- in eine Transportstellung infolge eines Druckanstiegs im Leitungssystem (18) des energieübertragenden Leitungsstrangs bei Überschreitung eines definierten Druckschwellwertes Δp ein Steuersignal (X1) liefert, welches die selbsttätige Verstellung eines Wegeventils 20) von der Durchlaß- in die Sperrstellung der Transportverriegelung, der Arbeitsorgane (7,8) realisiert, und nur durch fremdbetätigte Auslösung eines Signals (X2) die Verriegelung durch die Hubzylindersteuerung wieder aufgehoben wird.

2. Transportverriegelung einer landwirtschaftlichen Arbeitsmaschine nach Anspruch 1,
**dadurch gekennzeichnet,**
**daß** die Hubzylindersteuerung (16) zur Realisierung der Verriegelungs- und Entriegelungsfunktion wenigstens je einen an sich bekannten Drucksensor (19), ein Wegeventil (20) und ein Schaltgerät (21) umfaßt.

3. Transportverriegelung einer landwirtschaftlichen Arbeitsmaschine nach Anspruch 2,
**dadurch gekennzeichnet,**
**daß** die Verriegelungsfunktion der Hubzylindersteuerung (16) immer dann ausgelöst wird, wenn der Drucksensor (19) ein Steuersignal (X1) über das Schaltgerät (21) zum Wegeventil (20) sendet, so daß dieses von der Durchlaß- in die Sperrstellung geschaltet wird.

4. Transportverriegelung einer landwirtschaftlichen Arbeitsmaschine nach einem oder mehreren der vorhergehenden Ansprüche,
**dadurch gekennzeichnet,**
**daß** der Drucksensor (19) nur bei Überschreitung eines Schwellwertes ?p ein Steuersignal (X1) erzeugt.

5. Transportverriegelung einer landwirtschaftlichen Arbeitsmaschine nach Anspruch 4,
**dadurch gekennzeichnet,**
**daß** der Schwellwert Δp des Drucksensors (19) einstellbar ist.

6. Transportverriegelung einer landwirtschaftlichen Arbeitsmaschine nach einem oder mehreren der vorhergehenden Ansprüche,
**dadurch gekennzeichnet,**
**daß** die Entriegelungsfunktion der Hubzylindersteuerung (16) immer dann ausgelöst wird, wenn über das Schaltgerät (21) fremdgesteuert ein Signal (X2) zum Wegeventil (20) übertragen wird, so daß dieses von der Sperr- in die Durchlaßstellung umschaltet.

7. Transportverriegelung einer landwirtschaftlichen Arbeitsmaschine nach einem oder mehreren der vorhergehenden Ansprüche,
**dadurch gekennzeichnet,**
**daß** die Auslösung des Signals (X2) am Schaltgerät (21) manuell oder ferngesteuert erfolgen kann.

8. Transportverriegelung einer landwirtschaftlichen Arbeitsmaschine nach einem oder mehreren der vorhergehenden Ansprüche,
**dadurch gekennzeichnet,**
**daß** das Schaltgerät (21) an der landwirtschaftlichen Arbeitsmaschine (1) fixiert ist oder über flexible Leitungssysteme (17, 22) direkt im Zugfahrzeug (12) anbringbar ist.

9. Transportverriegelung einer landwirtschaftlichen Arbeitsmaschine nach Anspruch 8,
**dadurch gekennzeichnet,**
**daß** die flexiblen Leitungssysteme (17, 22) durch an sich bekannte nicht leitungsgebundene Übertragungssysteme ersetzt werden.

10. Transportverriegelung einer landwirtschaftlichen Arbeitsmaschine nach einem oder mehreren der vorhergehenden Ansprüche,
**dadurch gekennzeichnet,**
**daß** mehreren Hubzylindern (13, 14) eine Hubzylindersteuerung (16) zugeordnet ist.

## Claims

1. A transport locking arrangement of an agricultural working machine whose working members form at least one structural unit which is pivotably movably connected by way of at least one stroke cylinder (13, 14) to a machine frame which can be fitted to a tractor or carrier vehicle (12) for the implementation of one or more working or transport positions and whose transport locking arrangement is automatically locked in the transport position and which is unlockable again by remote actuation,
**characterised in that**
a stroke cylinder control (16) is associated with the transport locking arrangement in such a way that upon pivotal movement of the working members (7, 8) from a working position into a transport position, as a consequence of a rise in pressure in the conduit system (18) of the energy-transmitting conduit line when a defined pressure threshold Δp is exceeded, the stroke cylinder control supplies a control signal (X1) which implements automatic displacement of a directional control valve (20) from the transmitting position into the blocking position of the transport locking arrangement of the working members (7, 8) and the locking action is removed again by the stroke cylinder control only by remotely actuated triggering of a signal (X2).

2. A transport locking arrangement of an agricultural working machine according to claim 1 **characterised in that** to implement the locking and unlocking function the stroke cylinder control (16) has at least one respective per se known pressure sensor (19), a directional control valve (20) and a switching device (21).

3. A transport locking arrangement of an agricultural working machine according to claim 2 **characterised in that** the locking function of the stroke cylinder control (16) is triggered whenever the pressure sensor (19) sends a control signal (X1) by way of the switching device (21) to the directional control valve (20) so that same is switched from the transmitting position into the blocking position.

4. A transport locking arrangement of an agricultural working machine according to one or more of the preceding claims **characterised in that** the pressure sensor (19) produces a control signal (X1) only when a threshold value Δp is exceeded.

5. A transport locking arrangement of an agricultural working machine according to claim 4 **characterised in that** the threshold value Δp of the pressure sensor (19) is adjustable.

6. A transport locking arrangement of an agricultural working machine according to one or more of the preceding claims **characterised in that** the unlocking function of the stroke cylinder control (16) is triggered whenever a signal (X2) is transmitted to the directional control valve (20) under remote control by way of the switching device (21) so that the directional control valve switches over from the blocking position into the transmitting position.

7. A transport locking arrangement of an agricultural working machine according to one or more of the preceding claims **characterised in that** triggering of the signal (X2) can be effected under remote control or manually at the switching device (21).

8. A transport locking arrangement of an agricultural working machine according to one or more of the preceding claims **characterised in that** the switching device (21) is fixed to the agricultural working machine (1) or can be mounted directly in the tractor vehicle (12) by way of flexible line systems (17, 22).

9. A transport locking arrangement of an agricultural working machine according to claim 8 **characterised in that** the flexible line systems (17, 22) are replaced by per se known transmission systems which are not line-bound.

10. A transport locking arrangement of an agricultural working machine according to one or more of the preceding claims **characterised in that** a stroke cylinder control (16) is associated with a plurality of stroke cylinders (13, 14).

## Revendications

1. Dispositif de verrouillage de transport d'une machine agricole de travail dont les organes de travail forment au moins un ensemble structurel qui, par l'intermédiaire d'au moins un vérin (13, 14), est relié à pivotement à un bâti de machine adaptable à un véhicule tracteur ou porteur (12) pour adopter une ou plusieurs positions de travail et de transport, et dont le dispositif de verrouillage de transport est automatiquement verrouillé en position de transport et peut à nouveau être déverrouillé par télécommande, **caractérisé en ce qu'**au dispositif de verrouillage de transport est associée une commande par vérins (16), de façon que, lors du pivotement des organes de travail (7, 8) d'une position de travail vers une position de transport suite à l'élévation de pression dans le système de conduites (18) du faisceau de conduites transmetteur d'énergie, ladite commande par vérins (16) fournisse, en cas de dépassement d'une valeur de seuil de pression définie Δp, un signal de commande (X1) qui fait passer automatiquement une valve de distribution (20) de la position passante à la position bloquée du dispositif de verrouillage de transport des organes de travail (7, 8), et **en ce que** le verrouillage par la commande par vérins ne peut être annulé que par le déclenchement d'un signal (X2) actionné de l'extérieur.

2. Dispositif de verrouillage de transport d'une machine agricole de travail selon la revendication 1, **caractérisé en ce que**, pour réaliser la fonction de verrouillage et de déverrouillage, la commande par vérins (16) comporte pour chaque vérin au moins un capteur de pression (19) connu en soi, une valve de distribution (20) et un appareil de commutation (21).

3. Dispositif de verrouillage de transport d'une machine agricole de travail selon la revendication 2, **caractérisé en ce que** la fonction de verrouillage de la commande par vérins (16) n'est déclenchée que lorsque le capteur de pression (19) envoie, par l'intermédiaire de l'appareil de commutation (21), un signal de commande (X1) à la valve de distribution (20), de façon que celle-ci passe de la position passante à la position bloquée.

4. Dispositif de verrouillage de transport d'une machine agricole de travail selon une ou plusieurs des revendications précédentes, **caractérisé en ce que** le capteur de pression (19) ne produit un signal de commande (X1) qu'en cas de dépassement d'une valeur de seuil Δp.

5. Dispositif de verrouillage de transport d'une machine agricole de travail selon la revendication 4, **caractérisé en ce que** la valeur de seuil Δp du capteur de pression (19) est réglable.

6. Dispositif de verrouillage de transport d'une machine agricole de travail selon une ou plusieurs des revendications précédentes, **caractérisé en ce que** la fonction de déverrouillage de la commande par vérins (16) n'est déclenchée que lorsqu'un signal (X2) piloté de l'extérieur est transmis, par l'intermédiaire de l'appareil de commutation (21), à la valve de distribution (20), de façon que celle-ci passe de la position bloquée à la position passante.

7. Dispositif de verrouillage de transport d'une machine agricole de travail selon une ou plusieurs des revendications précédentes, **caractérisé en ce que** le déclenchement du signal (X2) au niveau de l'appareil de commutation (21) peut s'effectuer manuellement ou de manière télécommandée.

8. Dispositif de verrouillage de transport d'une machine agricole de travail selon une ou plusieurs des revendications précédentes, **caractérisé en ce que** l'appareil de commutation (21) est fixé à la machine agricole de travail (1) ou peut être installé directement sur le véhicule tracteur (12) par l'intermédiaire de systèmes de conduites flexibles (17, 22).

9. Dispositif de verrouillage de transport d'une machine agricole de travail selon la revendication 8, **caractérisé en ce que** les systèmes de conduites flexibles (17, 22) sont remplacés par des systèmes de transmission connus en soi qui ne sont pas tributaires de conduites.

10. Dispositif de verrouillage de transport d'une machine agricole de travail selon une ou plusieurs des revendications précédentes, **caractérisé en ce qu'**une commande par vérins (16) est associée à plusieurs vérins (13, 14).
